# EUROPÄISCHE PATENTSCHRIFT

(11) **EP 1 119 752 B1**
(45) Veröffentlichungstag und Bekanntmachung des Hinweises auf die Patenterteilung: **06.11.2002**
(21) Anmeldenummer: 99940067.4
(22) Anmeldetag: 28.07.1999
(51) Int. Cl.: G01M 3/00, G01M 3/32

(54) **FOLIEN-LECKSUCHER**
FILM LEAK DETECTOR
DETECTEUR DE FUITES PELLICULAIRE

(30) Priorität: 10.10.1998 DE 19846800
(43) Veröffentlichungstag der Anmeldung: 01.08.2001
(73) Patentinhaber: Inficon GmbH, 50968 Köln (DE)
(72) Erfinder: FLOSBACH, Rudolf, D-51688 Wipperfürth (DE)
(74) Vertreter: Leineweber, Jürgen, Dipl.-Phys.
(86) Internationale Anmeldenummer: EP9905393
(87) Internationale Veröffentlichungsnummer: WO00022398

(56) Entgegenhaltungen:
- EP-A1- 0 313 678
- DE-A1- 19 524 050
- DE-A1- 19 642 099
- US-A- 3 027 753
- US-A- 3 813 923

## Beschreibung

Die Erfindung bezieht sich auf einen Folien-Lecksucher mit zwei jeweils in einem Rahmen eingespannten Folien. Folien-Lecksucher dieser Art sind aus der DE-A-196 42 099 bekannt.

Der vorliegenden Erfindung liegt die Aufgabe zugrunde, einen Folien-Lecksucher der bekannten Art einfach und stabil aufzubauen sowie in Bezug auf seine Bedienung zu verbessern.

Diese Aufgabe wird durch die in den Patentansprüchen aufgeführten Maßnahmen gelöst.

Vorteile und Einzelheiten der Erfindung sollen anhand von in den Figuren dargestellten Ausführungsbeispielen erläutert werden. Es zeigen
- Figur 1 schematisch einen Folien-Lecksucher nach der Erfindung einschließlich seines Schaltschemas,
- Figur 2 einen Teilschnitt durch die Rahmen, in die die Folien eingespannt sind, und weitere Details in Ansicht sowie
- Figur 3 einen Schnitt durch eine lösbare Verbindung eines an einer Folie befestigten Anschlussstutzens mit einer weiterführenden Leitung.

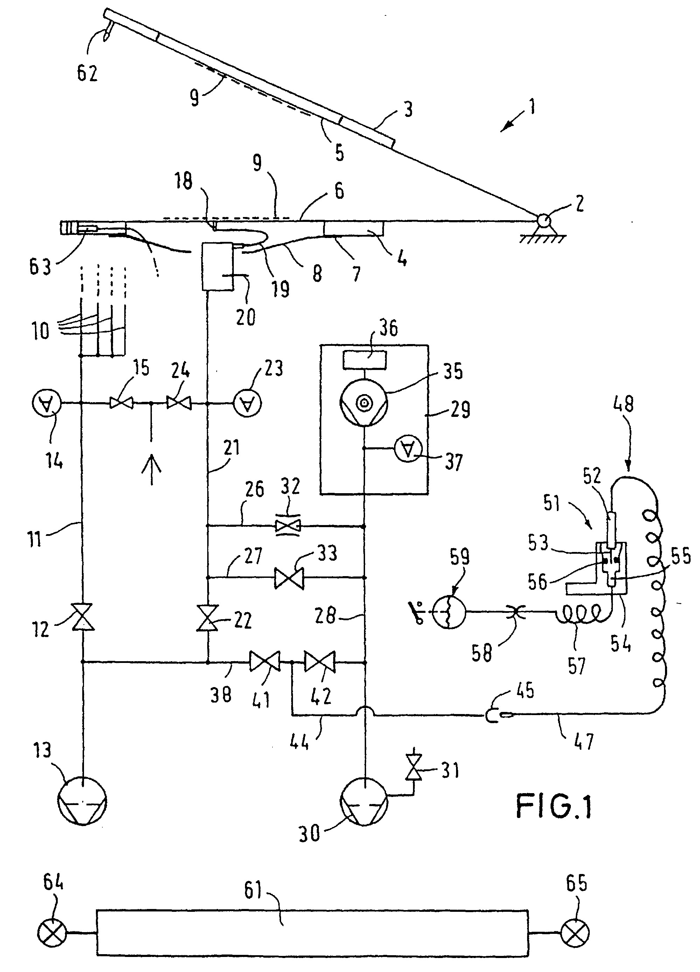

Figur 1 zeigt schematisch den Folien-Lecksucher 1 mit seinen beiden über das Gelenk 2 verbundenen Rahmen 3 und 4 sowie den darin eingespannten Folien 5 und 6. Die Rahmen 3 und 4 sind kreisförmig. Der untere Rahmen stützt sich auf dem Rand 7 eines tellerförmigen Bodens 8 - vorzugsweise aus Stahl - ab. Auf den Folien 5, 6 befindliche Vlies-Abschnitte 9 sichern die Bildung eines zusammenhängenden Testraumes bei eingelegtem Prüfling. Der prinzipielle Aufbau eines Folien-Lecksuchers dieser Art ist im übrigen aus der DE-A-196 42 099 bekannt.

Der untere Rahmen 4 ist mit mehreren im einzelnen nicht dargestellten Bohrungen ausgerüstet, die in das Innere des Testraumes münden, der von den beiden Folien 5, 6 bei eingelegtem Prüfling gebildet wird. An diese Bohrungen sind die Leitungsabschnitte 10 angeschlossen, die über die gemeinsame Leitung 11 mit dem Ventil 12 mit der Vorvakuumpumpe 13 in Verbindung stehen. In Bezug auf das Ventil 12 stromaufwärts sind an die Leitung 11 noch das Druckmessgerät 14 und das Belüftungsventil 15 angeschlossen.

Die untere Folie 6 ist etwa in ihrer Mitte mit einem Leitungsanschluss 18 ausgerüstet, an die sich der Leitungsabschnitt 19, der Filter 20 und die Leitung 21 mit dem Ventil 22 anschließen. Auch die Leitung 21 ist mit einem Druckmessgerät 23 und mit einem Belüftungsventil 24 ausgerüstet.

Der Abschnitt der Leitung 21, der sich zwischen dem Anschluss des Druckmessgerätes 23 und dem Ventil 22 befindet, steht über zwei zueinander parallele Leitungen 26 und 27 mit einer Leitung 28 in Verbindung, die sich zwischen dem Testgasdetektor 29 und einer zweiten Vorvakuumpumpe 30 erstreckt. In der Leitung 26 befindet sich ein Drosselventil 32. Die Leitung 27 ist mit einem Ventil 33 ausgerüstet.

Die Vorvakuumpumpe 13 ist zweckmäßig einstufig, die Vorvakuumpumpe 30 zweistufig ausgebildet. Die Pumpe 30 ist mit einer Gasballast-Einrichtung ausgrüstet. Bei offenem Ventil 31 strömt Luft (oder auch Inertgas) in die Pumpe 30 ein.

Im Testgasdetektor 29 befindet sich eine Turbomolekularvakuumpumpe 35, deren Auslass mit der Leitung 28 in Verbindung steht. An den Einlass der Turbomolekularvakuumpumpe ist ein Massenspektrometer 36 angeschlossen. Außerdem ist ein Druckmessgerät 37 Bestandteil des Leckdetektors 29, welches den Druck in der Leitung 28 misst.

Die beiden Leitungen 11 und 28 stehen in Bezug auf die Ventile 12 und 22 stromabwärts über eine Leitung 38 in Verbindung, in die auch die Leitung 21 mündet. In dieser Leitung 38 befinden sich zwischen der Mündung der Leitung 21 und der Leitung 28 die Ventile 41 und 42. In den zwischen den Ventilen 41 und 42 befindlichen Abschnitt der Leitung 38 mündet eine Leitung 44, die mit einer Kupplung 45 in Verbindung steht. Die Kupplung 45 dient der Herstellung der Verbindung der Leitung 44 mit der Schnüffelleitung 47 eines Schnüfflers 48. Die mit 51 bezeichnete Schnüffelsonde des Schnüfflers 48 umfasst den Handgriff 52 und die Schnüffelspitze 53.

Für die Ablage der Schnüffelsonde ist ein Halter 54 vorgesehen. Dieser ist entweder am Folien-Lecksucher 1 befestigt oder als separater Ständer ausgebildet. Er weist einen Hohlraum 55 auf, der bei abgelegter Sonde 51 die Schnüffelspitze aufnimmt. Außerdem ist eine Dichtung 56 vorgesehen, die den Hohlraum 55 bei abgelegter Sonde 51 gegenüber dem Handgriff 52 abdichtet. An den Hohlraum 55 schließt sich eine Leitung 57 an, die über eine Kupplung 58 mit einem im Gehäuse des Folien-Lecksuchers 1 untergebrachten Unterdruckschalter 59 in Verbindung steht. Als Schnüffelleitung 47 dient in bekannter Weise eine Kapillare (Durchmesser ca. 0,5 mm). Dieses gilt auch für die Leitung 57, damit sich der von der Schnüffelspitze 53 im Raum 55 erzeugte Unterdruck schnell auf den Unterdruckschalter 59 auswirkt.

Im Folien-Lecksucher nach Figur 1 läuft der Lecksuchzyklus automatisch ab. Zur Steuerung des Ablaufs ist die nur als Block 61 dargestellte Steuerzentrale vorgesehen. Mit ihr sind alle Messgeräte und alle zu steuernden Bauteile verbunden. Dieses gilt auch für einen Schalter, der mit dem Schließen des Testraumes betätigt wird. Beim dargestellten Ausführungsbeispiel handelt es sich um einen Näherungsschalter, der einen am Rahmen 3 vorgesehenen Metallstift 62 und einen am Rahmen 4 angeordneten Sensor 63 umfasst. Der Sensor 63 steht mit der Steuerzentrale 61 in Verbindung. Auch andere Schalter, seien sie elektrisch, mechanisch oder optisch betrieben, können zu diesem Zweck eingesetzt werden.

Die Vielzahl der elektrischen Verbindungsleitungen zwischen der Steuerzentrale 61 und den Bauteilen sind der Übersichtlichkeit halber nicht dargestellt. Mit der Steuerzentrale verbunden sind auch zwei Signallampen 64, 65, von denen eine grün, wenn ein Prüfling als dicht, und die andere rot aufleuchtet, wenn ein Prüfling als undicht erkannt wird.

Beim betriebsbereiten Folien-Lecksucher 1 sind, wenn der Testraum - wie in Figur 1 dargestellt - geöffnet bzw. der obere Rahmen 3 vom unteren Rahmen 4 abgehoben ist, sämtliche Ventile - bis auf das Ventil 41 - geschlossen. Nach dem Auflegen eines Prüflings auf die untere Folie 6 und nach dem Auflegen des oberen Rahmens 3 auf den unteren Rahmen 4 löst der Näherungsschalter 62, 63 den Ablauf eines Lecksuchvorganges aus. Dazu wird zunächst geprüft, ob sich im System ein erhöhter Heliumuntergrund befindet, der Leckmessungen verfälschen könnte. Dieses geschieht mit Hilfe des Massenspektrometers 36. Meldet es einen zu hohen Untergrund, wird das Ventil 31 geöffnet und die Pumpe 30 so lange mit Gasballast betrieben, bis der Heliumuntergrund einen unschädlichen Wert angenommen hat.

In der Regel ist ein erhöhter Helium-Untergrund nicht vorhanden, so dass mit dem Schließen des Testraumes auch der eigentliche Lecksuchzyklus beginnt. Zunächst werden die Ventile 12 und 22 geöffnet. Dieses hat eine äußerst schnelle Evakuierung des Raumes zwischen den Folien 5, 6 zur Folge. Außerhalb der Bereiche, in denen sich die Vlies-Abschnitte 9 befinden, bilden die sich unmittelbar berührenden Folien 5, 6 die Abdichtung des Testraumes.

Von Bedeutung ist, dass in der ersten Evakuierphase nur die Ventile 12 und 22 geöffnet sind. Nur in dieser ersten Phase geschieht es, dass die auf Lecks zu untersuchende Wandung/Verpackung des Prüflings einen Defekt erleiden, z.B. platzen könnte. Da in dieser Phase Verbindungen zwischen dem Testraum und dem Leckdetektor geschlossen ist, besteht nicht die Gefahr einer Helium-Verseuchung oder einer Verschmutzung durch aus dem Prüfling austretendes Produkt.

Bei einem Druck von wenigen 100 mbar (100 bis 300 mbar) wird das Drosselventil 32 geöffnet. Es ist so bemessen, dass der notwendige Vorvakuumdruck der Turbomolekularvakuumpumpe 35 keine unzulässig hohen Werte annimmt. Mit dem Öffnen des Drosselventils 32 beginnt die Groblecksuche. Strömt Helium durch das Drosselventil 32, gelangt es im Gegenstrom durch die Turbomolekularpumpe 35 zum Massenspektrometer 36. Wird Helium registriert, ist der Prüfling undicht; der Lecksuchzyklus wird abgebrochen.

Für den Fall, dass Helium noch nicht registriert wird, wird der Evakuierprozess fortgesetzt. Erreicht der Druck einen mit dem Gerät 23 gemessenen Wert, der in der Größenordnung des Vorvakuumdruckes der Turbomolekularpumpe 35 liegt, werden die Ventile 12, 22 und 32 geschlossen und das Ventil 33 geöffnet. Es beginnt die Phase der empfindlichen Lecksuche. Diese wird abgebrochen, wenn entweder Testgas registriert wird, der Prüfling also undicht ist, oder nach einer bestimmten Zeit. Entweder wird eine feste Zeitspanne vorgegeben oder es wird so lange geprüft, bis der Druck (gemessen mit dem Gerät 23) einen bestimmten Wert unterschreitet. Wird innerhalb dieser Zeit Testgas nicht registriert, lässt dieses Ergebnis auf einen dichten Prüfling schließen.

Während der empfindlichen Lecksuchphase stellen nur die Leitungen 19, 21 und 27 die Verbindung zwischen dem Testraum und dem Leckdetektor 29 dar. Ein Platzen des Prüflings ist nicht mehr zu erwarten. Im übrigen befindet sich zwischen den Leitungen 19 und 21 der Partikelfilter 20, der jede Verunreinigung vom Leckdetektor 29 fernhält.

Die Beendigung des Lecksuchzyklus erfolgt in der Weise, dass alle bisher offenen Ventile - bis auf Ventil 41 - geschlossen und die Ventile 15, 24 geöffnet werden. Der Testraum wird belüftet, der obere Rahmen 3 kann vom unteren Rahmen 4 abgehoben werden. Zweckmäßig ist es, wenn die beiden gelenkig miteinander verbundenen Rahmen 3, 4 im Bereich des Gelenks 2 unter der Wirkung einer nicht dargestellten Federeinrichtung stehen, deren Kraft ständig in Öffnungsrichtung wirkt. Ihre Kraft sollte so bemessen sein, dass das während der Lecksuche erzeugte Vakuum den Testraum geschlossen hält und dass der Rahmen 3 nach dem Belüftungsvorgang seine Offenstellung einnimmt.

Wird während der Leckprüfung festgestellt, dass ein Prüfling undicht ist, dann ist der Benutzer daran interessiert, den Ort des Lecks kennenzulernen. Dazu ist der erfindungsgemäße Folienlecksucher mit einem Schnüffler 48 ausgerüstet. Dieser ist mit seiner Schnüffelleitung 47 über die Kupplung 45 an die Leitung 44 angeschlossen.

Solange der Schnüffler 48 nicht genutzt wird, ist er in einem Halter 54 abgelegt. Dieser Halter 54 ist mit den bereits beschriebenen Mitteln 55 bis 59 ausgerüstet, mit deren Hilfe die Steuerzentrale 61 erkennen kann, ob die Sonde 51 im Halter 54 abgelegt ist oder nicht. Auch andere Mittel - seien es mechanisch, elektrisch oder induktiv betätigte Schalter - können zu diesem Zweck verwendet werden.

Solange sich die Sonde 51 im Halter 54 befindet, wird - wie bereits erwähnt - das Ventil 41 offengehalten. Der Schnüffler befindet sich dadurch ständig im stand by. Erst dann, wenn er aus seinem Halter 54 herausgenommen wird, schließt das Ventil 41 und öffnet das Ventil 42. Der den Schnüffler 48 durchsetzende Gasstrom gelangt dadurch in die Leitung 28 und wird von der Pumpe 30 aufrechterhalten. In diesem Zustand ist die Schnüffellecksuche möglich. Wird Helium von der Schnüffelspitze 53 aufgenommen, gelangt es im Gegenstrom durch die Turbomolekularpumpe 35 zum Massenspektrometer 36.

Die Steuerzentrale 61 ist derart programmiert, dass es zu einer Umschaltung des Schnüfflers 48 von stand by auf Lecksuchbetrieb (Umschaltung der Ventile 41 und 42) nicht kommt, solange der Annäherungsschalter 62, 63 geschlossen ist. Die gleichzeitige, zu Fehlmessungen führende Lecksuche über den Folien-Lecksucher 1 und über den Schnüffler 48 ist dadurch ausgeschlossen.

Bei der quantitativen Lecksuche interessiert den Benutzer in aller Regel die Leckrate eines aufgefundenen Lecks, gemessen in mbar l/sec.

Bei der Untersuchung von mit hohen Stückzahlen hergestellten Prüflingen besteht jedoch auch ein Interesse daran, die Konzentration des Testgases im Prüfling zu messen. Dieses kann dadurch geschehen, dass die Schnüffelspitze 53 in den Prüfling eingestochen wird, oder dass der Prüfling mit einem definierten Leck versehen wird und im Folien-Lecksucher 1 ein Lecksuchzyklus ausgeführt wird. Die Steuerzentrale ist deshalb so ausgebildet, dass auf einem nicht dargestellten Display sowohl die Leckrate als auch die Konzentration ablesbar ist.

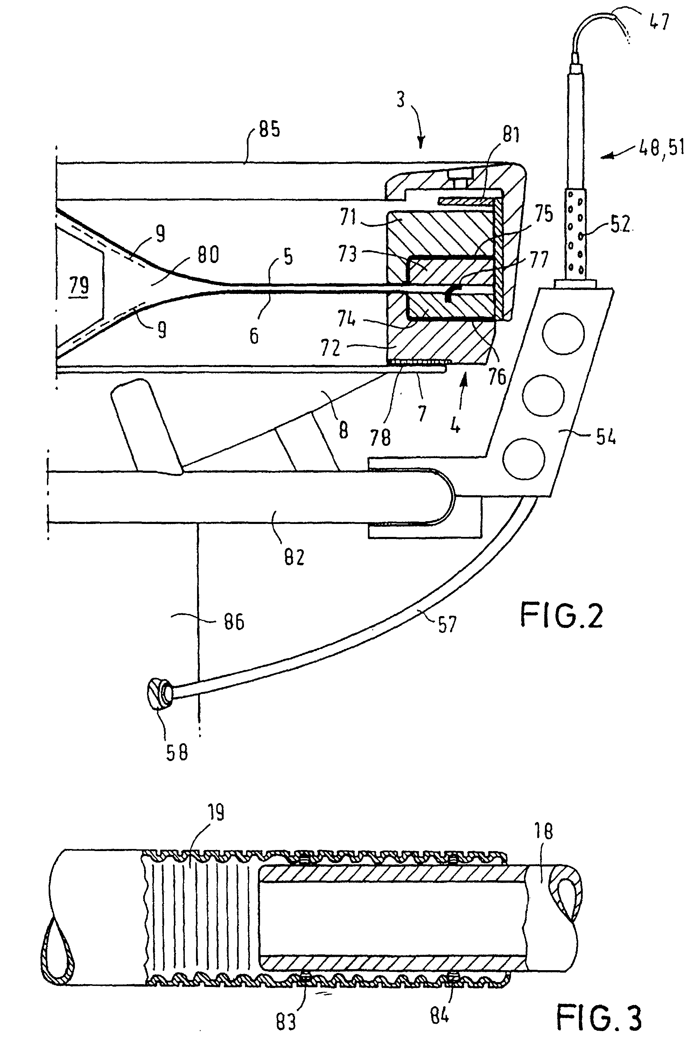

Figur 2 lässt den Aufbau der Rahmen 3 und 4 erkennen. Sie bestehen aus jeweils einem äußeren Ring 71 bzw. 72 und einem inneren Ring 73, 74. Zwischen den Ringpaaren sind die Folien 5, 6 befestigt, vorzugsweise geklebt. Die jeweils inneren Ringe befinden sich in zueinander korrespondierenden Aussparungen 75, 76. Die Aussparungen sind derart angeordnet, dass die äußeren Ringe 71, 72 in ihren dem Testraum zugewandten Bereichen einander unmittelbar gegenüberliegen und dadurch die Ebenen der eingespannten Folien 5, 6 bestimmen. Im äußeren Bereich liegen die inneren Ringe 73, 74 einander unmittelbar gegenüber. Zwischen ihnen befindet sich eine Lippendichtung 77. Die Folien 5, 6 erstrecken sich durch den winkelförmigen Spalt zwischen den jeweiligen Ringpaaren und sind damit vollflächig verklebt oder verschraubt.

In Figur 2 ist noch ersichtlich, dass die Folien 5, 6 bei einem dazwischen eingelegten Prüfling 79 einen Testraum 80 bilden. Die Vlies-Abschnitte 9 sichern die Bildung eines zusammenhängenden Testraumes 80.

Der Ring 72 des unteren Rahmens 4 stützt sich auf dem Rand 7 des tellerförmigen Bodens 8 ab und ist mit diesem verklebt (Klebeschicht 78). Dem oberen Rahmen 3 ist ein Träger zugeordnet, der von einem den Rahmen 3 von außen und teilweise von oben umfassendes Stahlprofil 81 gebildet wird. Der Rahmen 3 ist in axialer Richtung schwimmend am Stahlprofil 81 befestigt, so dass er nach seinem Absenken gleichmäßig dem gesamten Umfang des Rahmens 4 aufliegt. Durch die Evakuierung des Testraumes 80 wird zusätzlich noch eine Anpresskraft erzeugt. In axialer Richtung erstreckt sich das Stahlprofil 81 über den Rahmen 3 hinaus nach unten und bildet in der letzten Phase der Absenkbewegung eine Führung. Zur Abdeckung des Stahlringes 81 dient der Dekorring 85.

Figur 2 zeigt noch, dass der dargestellte Folien-Lecksucher mit einem umlaufenden Handgriff 82 ausgerüstet ist. An diesem ist der Halter 54 für den Schnüffler 48 befestigt. Im Halter 54 befinden sich die bereits zu Figur 2 beschriebenen Mittel die erkennen lassen, ob die Sonde 51 des Schnüfflers 48 im Halter 54 abgelegt ist oder nicht. Zwischen dem Halter 54 und dem Gehäuse 86 erstreckt sich der Kapillarschlauch 57, der in die Kupplung 58 eingesteckt ist.

Figur 3 zeigt den Übergang zwischen dem Anschlussstutzen 18 und dem weiterführenden Leitungsabschnitt 19. Beide bestehen aus Kunststoff, vorzugsweise Polyamid. Der Leitungsabschnitt 19 ist als Wellrohr ausgebildet und umgibt gemeinsam mit Dichtringen 83, 84 den Anschlussstutzen 18.

## Patentansprüche

1. Folien-Lecksucher mit zwei jeweils in einem Rahmen (3, 4) eingespannten Folien (5, 6), **dadurch gekennzeichnet, dass** jeder der Rahmen (3, 4) aus zwei Kunststoffteilrahmen (71, 73 bzw. 72, 74) besteht, zwischen denen die jeweilige Folie (5, 6) befestigt ist.

2. Lecksucher nach Anspruch 1, **dadurch gekennzeichnet, dass** die Folien (5, 6) vollflächig mit den ihnen anliegenden Rahmenflächen verklebt oder verschraubt sind.

3. Lecksucher nach Anspruch 1 oder 2, **dadurch gekennzeichnet, dass** die Rahmen (3, 4) jeweils aus einem äußeren (71, 72) und einem inneren Teilrahmen (73, 74) bestehen und dass der jeweils äußere Teilrahmen (71, 72) mit einer Aussparung (75, 76) ausgerüstet ist, in der der jeweils innere Teilrahmen (73, 74) angeordnet ist.

4. Lecksucher nach Anspruch 3, **dadurch gekennzeichnet, dass** sich die zueinander korrespondierenden Aussparungen (75, 76) in den dem Testraum (80) abgewandten Bereichen der äußeren Teilrahmen (71, 72) befinden und dass einer der in den Aussparungen angeordneten inneren Teilrahmen (73, 74) mit einer Dichtung, vorzugsweise mit einer Lippendichtung (77), ausgerüstet ist.

5. Lecksucher nach einem der Ansprüche 1 bis 4, **dadurch gekennzeichnet, dass** sich der untere Rahmen (4) auf dem Rand (7) eines tellerförmigen Bodens (8) abstützt.

6. Lecksucher nach einem der Ansprüche 1 bis 5, **dadurch gekennzeichnet, dass** als Träger des oberen Rahmens (3) ein den Rahmen umgebendes Stahlprofil (81) vorgesehen ist.

7. Lecksucher nach Anspruch 6, **dadurch gekennzeichnet, dass** das Stahlprofil (81) winkelförmig ausgebildet ist und den oberen Rahmen (3) zumindest teilweise von oben und von außen umfasst.

8. Lecksucher nach Anspruch 6 oder 7, **dadurch gekennzeichnet, dass** der obere Rahmen (3) schwimmend am Stahlprofil (81) befestigt ist.

9. Lecksucher nach Anspruch 6, 7 oder 8, **dadurch gekennzeichnet, dass** das Stahlprofil (81) im geschlossenen Zustand der Testkammer (80)auch den unteren Rahmen (4) teilweise umfasst.

10. Lecksucher nach einem der vorhergehenden Ansprüche, **dadurch gekennzeichnet, dass** die Rahmen (3, 4) und das Stahlprofil (81) kreisförmig gestaltet sind.

11. Lecksucher nach einem der vorhergehenden Ansprüche, **dadurch gekennzeichnet, dass** die Rahmen (3, 4) aus Kunststoff, vorzugsweise Polyamid, bestehen.

12. Lecksucher nach einem der vorhergehenden Ansprüche, **dadurch gekennzeichnet, dass** er mit einem in einem Halter (54) ablegbaren Schnüffler (48) ausgerüstet ist.

13. Lecksucher nach Anspruch 12, **dadurch gekennzeichnet, dass** er mit einem Träger (82) für den Halter (54) des Schnüfflers (48) ausgerüstet ist.

14. Lecksucher nach einem der vorhergehenden Ansprüche, **dadurch gekennzeichnet, dass** die Folie (6) des unteren Rahmens (4) mit einem zentralen Anschlussstutzen (18) ausgerüstet ist und dass eine Leitung (19) lösbar mit dem Anschlussstutzen (18) verbunden ist.

15. Lecksucher nach Anspruch 14, **dadurch gekennzeichnet, dass** der Anschlussstutzen (18) ein aus Kunststoff bestehender Rohrabschnitt ist.

16. Lecksucher nach Anspruch 15, **dadurch gekennzeichnet, dass** die Leitung (19) in dem dem Anschlussstutzen (18) zugewandten Bereich als Kunststoffwellrohr ausgebildet ist, das im Verbindungszustand den Anschlussstutzen (18) umgibt.

17. Lecksucher nach Anspruch 16, **dadurch gekennzeichnet, dass** sich zwischen dem Wellrohr und dem Anschlussstutzen mindestens ein Dichtungsring (83, 84) befindet.

18. Lecksucher nach einem der Ansprüche 15 bis 18, **dadurch gekennzeichnet, dass** Kunststoffrohrabschnitt (18) und/oder Wellrohr (19) aus Polyamid bestehen.

19. Lecksucher nach einem der vorhergehenden Ansprüche, **dadurch gekennzeichnet, dass** die Rahmen (3, 4) über ein Gelenk (2) miteinander verbunden sind.

20. Lecksucher nach Anspruch 19, **dadurch gekennzeichnet, dass** die beiden Rahmen (3, 4) unter der Wirkung einer Federeinrichtung stehen, deren Kraft ständig in Öffnungsrichtung wirkt.

## Claims

1. Film-type leak detector having two films (5, 6) each clamped in a frame (3, 4), **characterized in that** each of the frames (3, 4) comprises two plastic frame components (71, 73 or 72, 74, respectively), between which the respective film (5, 6) is mounted.

2. Leak detector according to Claim 1, **characterized in that** the films (5, 6) are bonded or screwed over their entire surface to the frame areas adjacent to them.

3. Leak detector according to Claim 1 or 2, **characterized in that** the frames (3, 4) each comprise an external (71, 72) and an internal part frame (73, 74) and **in that** the respective external part frame (71, 72) is equipped with a cutout (75, 76) in which the respective inner part frame (73, 74) is disposed.

4. Leak detector according to Claim 3, **characterized in that** the cutouts (75, 76) that match one another are situated in those regions of the external part frames (71, 72) remote from the test chamber (80) and **in that** one of the internal part frames (73, 74) disposed in the cutouts is equipped with a seal, preferably with a lip seal (77).

5. Leak detector according to one of Claims 1 to 4, **characterized in that** the lower frame (4) is supported on the rim (7) of a plate-shaped base (8).

6. Leak detector according to one of Claims 1 to 5, **characterized in that** a steel section (81) surrounding the frame is provided as carrier of the upper frame (3).

7. Leak detector according to Claim 6, **characterized in that** the steel section (81) is of angular design and encompasses the upper frame (3) at least partly from above and from the outside.

8. Leak detector according to Claim 6 or 7, **characterized in that** the upper frame (3) is attached in a floating manner on the steel section (81).

9. Leak detector according to Claim 6, 7 or 8, **characterized in that** the steel section (81) also partly encompasses the lower frame (4) in the closed state of the test chamber (80).

10. Leak detector according to one of the preceding claims, **characterized in that** the frames (3, 4) and the steel section (81) are of circular design.

11. Leak detector according to one of the preceding claims, **characterized in that** the frames (3, 4) are composed of plastic, preferably polyamide.

12. Leak detector according to one of the preceding claims, **characterized in that** it is equipped with a snifter valve (48) that can be stored in a holder (54).

13. Leak detector according to Claim 12, **characterized in that** it is equipped with a carrier (82) for the holder (54) of the snifter valve (48).

14. Leak detector according to one of the preceding claims, **characterized in that** the film (6) of the lower frame (4) is equipped with a central connecting piece (18) and **in that** a line (19) is connected detachably to the connecting piece (18).

15. Leak detector according to Claim 14, **characterized in that** the connection piece (18) is a tube section composed of plastic.

16. Leak detector according to Claim 15, **characterized in that** the line (19) is designed in the region adjacent to the connecting piece (18) as a plastic corrugated tube that surrounds the connecting piece (18) in the connection state.

17. Leak detector according to Claim 16, **characterized in that** at least one sealing ring (83, 84) is situated between the corrugated tube and the connecting piece.

18. Leak detector according to one of Claims 15 to 18, **characterized in that** the plastic tube section (18) and/or the corrugated tube (19) are/is composed of polyamide.

19. Leak detector according to one of the preceding claims, **characterized in that** the frames (3, 4) are joined together by an articulation (2).

20. Leak detector according to Claim 19, **characterized in that** the two frames (3, 4) are subject to the action of a spring device whose force constantly acts in the opening direction.

## Revendications

1. Détecteur de fuites à feuilles, comportant deux feuilles (5, 6) enserrées chacune dans un cadre (3, 4), **caractérisé en ce que** chacun des cadres (3, 4) est constitué par deux cadres partiels en matière plastique (71, 73 et 72, 74), entre lesquels est fixée la feuille respective (5, 6).

2. Détecteur de fuites selon la revendication 1, **caractérisé en ce que** les feuilles (5, 6) sont collées ou vissées sur toute la surface avec les surfaces de cadre qui sont en contact avec elles.

3. Détecteur de fuites selon l'une ou l'autre des revendications 1 et 2, **caractérisé en ce que** les cadres (3, 4) sont chacun constitués par un cadre partiel extérieur (71, 72) et par un cadre partiel intérieur (73, 74) et **en ce que** le cadre extérieur respectif (71, 72) est pourvu d'un évidement (75, 76) dans lequel est agencé le cadre intérieur respectif (73, 74).

4. Détecteur de fuites selon la revendication 3, **caractérisé en ce que** les évidements (75, 76) correspondant les uns aux autres se trouvent dans les régions, détournées de la chambre d'essai (80), des cadres partiels extérieurs, et **en ce qu'**un des cadres partiels intérieurs (73, 74) agencé dans les évidements est pourvu d'un joint d'étanchéité, de préférence d'un joint à lèvres (77).

5. Détecteur de fuites selon l'une des revendications 1 à 4, **caractérisé en ce que** le cadre inférieur (4) prend appui sur le bord (7) d'un fond en forme de coupelle (8).

6. Détecteur de fuites selon l'une des revendications 1 à 5, **caractérisé en ce qu'**il est prévu à titre de soutien du cadre supérieur (3) un profilé en acier (81) entourant le cadre.

7. Détecteur de fuites selon la revendication 6, **caractérisé en ce que** le profilé en acier (81) est réalisé de forme angulaire et **en ce qu'**il entoure le cadre supérieur (3) au moins partiellement depuis le haut et depuis l'extérieur.

8. Détecteur de fuites selon l'une ou l'autre des revendications 6 et 7, **caractérisé en ce que** le cadre supérieur (3) est fixé flottant sur le profilé en acier (81).

9. Détecteur de fuites selon l'une des revendications 6, 7 ou 8, **caractérisé en ce qu'**à l'état fermé de la chambre d'essai (80), le profilé en acier (81) entoure aussi partiellement le cadre inférieur (4).

10. Détecteur de fuites selon l'une des revendications précédentes, **caractérisé en ce que** les cadres (3, 4) et le profilé en acier (81) sont réalisés de forme circulaire.

11. Détecteur de fuites selon l'une des revendications précédentes, **caractérisé en ce que** les cadres (3, 4) sont constitués en matière plastique, de préférence en polyamide.

12. Détecteur de fuites selon l'une des revendications précédentes, **caractérisé en ce qu'**il est pourvu d'un reniflard (48) qui peut être agencé dans un support (54).

13. Détecteur de fuites selon la revendication 12, **caractérisé en ce qu'**il est pourvu d'une console (82) pour le support (54) du reniflard (48).

14. Détecteur de fuites selon l'une des revendications précédentes, **caractérisé en ce que** la feuille (6) du cadre inférieur (4) est pourvue d'une tubulure de raccord centrale (18) et **en ce qu'**une conduite (19) est reliée de manière détachable à la tubulure de raccord (18).

15. Détecteur de fuites selon la revendication 14, **caractérisé en ce que** la tubulure de raccord (18) est un tronçon de tube en matière plastique.

16. Détecteur de fuites selon la revendication 15, **caractérisé en ce que** dans la région tournée vers la tubulure de raccord (18), la conduite (19) est réalisée sous forme de tube ondulé en matière plastique qui entoure la tubulure de raccord (18) à l'état de connexion.

17. Détecteur de fuites selon la revendication 16, **caractérisé en ce qu'**au moins une bague d'étanchéité (83, 84) se trouve entre le tube ondulé et la tubulure de raccord.

18. Détecteur de fuites selon l'une des revendications 15 à 17, **caractérisé en ce que** le tronçon de tube en matière plastique (18) et/ou le tube ondulé (19) sont en polyamide.

19. Détecteur de fuites selon l'une des revendications précédentes, **caractérisé en ce que** les cadres (3, 4) sont reliés l'un à l'autre par une articulation (2).

20. Détecteur de fuites selon la revendication 19, **caractérisé en ce que** les deux cadres (3, 4) sont soumis à l'effet d'un dispositif à ressort dont la force agit en permanence en direction d'ouverture.
